# NEUE EUROPÄISCHE PATENTSCHRIFT

(11) **EP 0 291 680 B2**
(45) Veröffentlichungstag und Bekanntmachung des Hinweises auf die Entscheidung über den Einspruch: **01.03.1995**
(45) Hinweis auf die Patenterteilung: 15.01.1992
(21) Anmeldenummer: 88105416.7
(22) Anmeldetag: 30.05.1985
(51) Int. Cl.: C21C 5/52, F27B 3/18, F27D 3/00

(54) **Lichtbogenofen mit einem auf einer Seite des Ofengefässes vorgesehenen Aufnahmeraum für Chargiergut**
Arc furnace with a charging area on the side
Four à arc muni d'un espace de chargement sur le côté

(30) Priorität: 08.06.1984 DE 3421485
(43) Veröffentlichungstag der Anmeldung: 23.11.1988
(62) Teilanmeldung aus: 85106662.1
(73) Patentinhaber: Fuchs Systemtechnik GmbH, D-77731 Willstätt (DE)
(72) Erfinder: Fuchs, Gerhard, D-7640 Kehl-Bodersweier (DE); Ehle, Joachim, D-7606 Lautenbach (DE)
(74) Vertreter: Blumbach Weser Bergen Kramer

(56) Entgegenhaltungen:
- EP-A- 0 056 773
- DE-A- 1 937 839
- DE-A- 2 504 911
- DE-A- 2 553 697
- GB-A- 895 534
- GB-A- 2 002 500
- US-A- 1 542 562

## Beschreibung

Die Erfindung betrifft einen Lichtbogenofen gemaß dem Oberbegriff des Anspruchs 1.

Durch die GB-A-2 002 500 ist eine Vorrichtung zum Schmelzen und Raffinieren von Roh- oder Blisterkupfer bekanntgeworden, die einen Schachtofen für das Einsatzgut und einen Herdofen zur Kupferraffination aufweist. Der Schachtofen bildet mit dem Herdofen eine bauliche Einheit derart, daß sich eine auf der Herdofensohle abstützende abböschende Kupfersäule abbilden kann. Im Übergangsbereich von Schachtofen und Herdofen sind auf die Böschung der Kupfersäule richtbare Brenner angeordnet, während der Herdofen die zur metallurgischen Behandlung erforderlichen Vorrichtungsteile aufweist. Aufgrund der durch die Brenner bestreichbaren großen Böschungsfläche der sich auf dem Boden des Herdofens abstützenden Kupfersäule wird eine hohe Schmelzleistung erzielt. Das geschmolzene Einsatzgut tritt ohne Wandberührung in die im Herdofen befindliche Schmelze ein, und wird dort metallurgisch behandelt.

Durch die DE-A1-25 53 697 ist ein Metallschmelzofen mit einem Schacht, insbesondere für Aluminiumlegierungen, bekanntgeworden, bei dem der Boden des Schachtes schräg abfällt und zur Ausbildung des Schachtbodens zu einer Schmelzkammer mit einem Hochleistungsbrenner bestückt ist. Das im Schacht nach unten fallende Material wird einer Aufprallerhitzung durch das vom Hochleistungsbrenner injizierte Verbrennungsgas mit hoher Temperatur und großer Geschwindigkeit unterworfen, und im geschmolzenen Zustand in eine mit der Schmelzkammer verbundene Heizkammer überführt, die von Stützwalzen abgestützt und in eine Hin- und Herverschwenkbewegung versetzbar ist. Hierdurch soll erreicht werden, daß das aus der Schmelzkammer in die Heizkammer abfließende geschmolzene Metall durch Berührung mit den Wänden, die durch einen weiteren Brenner der Heizkammer erhitzt werden, innerhalb kurzer Zeit auf Gießtemperatur gebracht wird.

Die GB-A 895 534 offenbart einen Lichtbogenofen zum Einschmelzen von eisenhaltigem Material der zwei Herde umfaßt, die gemeinsam um eine vertikale Achse zwischen den beiden Herden drehbar sind. Über den zwei Herden befinden sich zwei Gewölbe unter die die beiden Herde abwechselnd gebracht werden können. Durch ein Gewölbe sind Elektroden geführt, das andere Gewölbe trägt einen Schacht für Chargiermaterial der in der Höhe des Gewölbes einen Rost zum Abstützen des Chargiermaterials aufweist. Ferner sind durch dieses Gewölbe Brenner gegen eine in den darunterliegenden Herd gebrachte Chargiergutmenge gerichtet. Das in den Schacht eingebrachte Chargiergut wird zunächst durch die Abgase aus dem Schmelzofen und der Brenner vorerhitzt, dann in den darunterliegenden Herd gebracht und durch die Brenner weitererhitzt, und schließlich nach Drehen der beiden Herde unter dem zweiten Gewölbe mittels Lichtbogen geschmolzen und gefrischt. Die Schmelze in dem einen Herd ist durch eine Wand daran gehindert, mit dem vorerhitzten Material des anderen Herdes in Verbindung zu kommen.

Bei dem durch die EP-A1-56 773 bekannt gewordenen Lichtbogenofen weist der Lichtbogenofen eine seitliche Ausbuchtung auf, deren Sohle höher liegt als die Sohle des Herdes. In diesen ausgebuchteten Teil wird das Einsatzgut chargiert und als Haufwerk auf der erhöhten Sohle gelagert. Durch den oberen Teil dieses Haufwerks werden die heißen Ofengase hindurchgeleitet, außerdem ist das Haufwerk der Strahlungshitze des Lichtbogenofens ausgesetzt und wird hierdurch erwärmt. Durch einen Schieber wird das vorerhitzte Einsatzgut jeweils aus dem untersten Abschnitt des Hautwerks schubweise in den Ofenherd befördert. Die Sohle der seitlichen Ausbuchtung des Ofens ist zum Ofenherd hin abfallend ausgebildet.

Die DE-A-19 37 839 beschreibt einen Lichtbogenofen zum kontinuierlichen Schmelzen von Eisenschrott. Um das zu schmelzende Erzeugnis kontinuierlich der Schmelzzone des Lichtbogenofens zuzuführen, ohne daß eine kontinuierliche Beschickung erforderlich ist, umfaßt der Ofen zumindest ein Abteil, das an den Brennraum angrenzt und einen Fülltrichter für die Einführung der zu schmelzenden Metallprodukte in das Ofengefäß bildet. Dessen Oberteil ist vom Brennraum durch eine vertikale feuerfeste Wand getrennt ist, während sein Unterteil mit dem Brennraum in Verbindung steht, in welchem die Elektroden und die Abstichöffnung angeordnet sind.

Die in das Abteil eingebrachten metallischen Ausgangsprodukte sind durch die feuerfeste Wand, die vorzugsweise mit einer Kühlung versehen ist und vom oberen Ende des Ofens bis in die Nähe des höchsten Niveaus des Flüssigkeitsbades reicht, gegen die Strahlung des Lichtbogens geschützt und behalten eine verhältnismäßig niedrige Temperatur bei, bis sie unterhalb des Rands der Schutzwand plötzlich der Strahlung des Lichtbogens ausgesetzt werden. Hierdurch soll eine progressive Erhitzung des Schrotts und eine schädliche Oxidation verhindert werden. Der sehr schnelle Übergang von einer Zone mit wenig erhöhter Temperatur zur Schmelzzone soll es ermöglichen zu vermeiden, daß die Produkte längere Zeit in einem Temperaturbereich verbleiben, wo plastische Deformationserscheinungen und Zusammenbackungen auftreten. Um ein Herabgleiten der noch festen Produkte und das Abfließen des geschmolzenen Metalls in die Schmelzzone zu erleichtern, weist die Gefäßwand einen der gegenüber der Horizontalen um etwa 60° geneigten Abschnitt auf. Hierdurch wird das in das Abteil eingebrachte Chargiermaterial zum Gefäßboden geleitet und unter der Einwirkung der Lichtbögen sowie im unmittelbaren Wärmeaustausch mit der flüssigen Phase geschmolzen. Um die Bildung einer festen Masse auf der Sohle des Mauerwerks zu verhindern, kann ein elektromagnetisches Rührwerk vorgesehen sein.

Durch die US-PS 3,441,651 ist ein Lichtbogenofen der im Gattungsbegriff des Anspruchs 1 genannten Art bekannt geworden mit einem an einer Seite des Ofengefäßes angeordneten, schachtförmigen Chargiergutvorwärmer, dessen Innenraum mit dem Innenraum des Ofengefäßes durch eine etwa in mittlerer Höhe des Ofengefäßes vorgesehenen Verbindungszone verbunden ist, die einerseits dazu dient, die beim Schmelzprozeß entstehenden heißen Ofengase in eine im Chargiergutvorwärmer gebildete Säule aus Einsatzmaterial ein- und im Gegenstrom zu dem absinkenden Einsatzmaterial hindurchzuleiten, dieses vorzuwärmen und andererseits als Austragsöffnung für das erhitzte Chargiergut im Bodenbereich des Chargiergutvorwärmers. Mittels eines hydraulisch betätigbaren Schiebers kann jeweils der vorgewärmte unterste Abschnitt der Chargiergutsäule durch die Verbindungszone in den Ofenherd befördert, d.h. das Einsatzgut schubweise dem Schmelzgefäß zügefuhrt werden. Eine am Chargiergutvorwärmer oben angebrachte Chargiervorrichtung erlaubt eine kontinuierliche Zufuhr des Chargiergutes in den Vorwärmer und ein in der Nähe hiervon angebrachter Gasauslaß einen Abzug der im Wärmetausch mit dem Chargiergut innerhalb der Chargiergutsäule abgekühlten Ofengase.

Aufgabe der Erfindung ist es, bei einem Lichtbogenofen gemäß dem Gattungsbegriff des Anspruchs 1 den möglichen Wärmetransport in das Chargiergut zu vergrößern und damit die Aufheizzeit des Chargiergutes zu verkürzen. Es soll eine bessere Ausnutzung der entstehenden heißen Ofengase beim Aufheizen des Chargiergutes ermöglicht und dadurch der thermische Wirkungsgrad verbessert werden. Außerdem soll ein kontinuierlicher Materialfluß aus dem Aufnahmeraum für das Chargiergut in den Ofenherd und damit sollen gleichmäßigere Betriebsbedingungen ermöglicht werden. Temperaturschwankungen und Schwankungen in der chemischen Zusammensetzung des Schmelzbades sollen herabgesetzt werden.

Die Erfindung ist durch die Merkmale des Anspruchs 1 gekennzeichnet. Vorteilhafte Ausgestaltungen der Erfindung sind den Unteransprüchen zu entnehmen.

Bei der erfindungsgemäßen Lösung sind zusätzlich auf den unteren Bereich des Aufnahmeraums für das Chargiergut gerichtete Brenner und/oder Düsen vorgesehen, so daß dieser Bereich zusätzlich erhitzt wird oder Sauerstoff, Kohle oder sonstige Zuschläge zur Temperatursteuerung und Steuerung der Zusammensetzung des Schmelzbades eingebracht werden können.

Der Boden des Aufnahmeraums für das Chargiergut ist so tief angeordnet, daß sich bei Bildung eines flüssigen Sumpfes im Ofenherd dieser in den Aufnahmeraum erstreckt und in der untersten Zone des aufgehäuften Chargiergutes einen unmittelbaren Stoff- und konduktiven Wärmeaustausch ermöglicht. Auf diese Weise wird ein zusätzlicher Wärmefluß für die unterste Zone der im flüssigen Sumpf stehenden Chargiergutsäule ermöglicht. In dieser Zone findet ein intensiver Stoff- und Wärmeaustausch statt, der durch die im Ofenherd stets auftretende Badbewegung verursacht wird. Die im Bereich der Lichtbögen überhitzte Schmelze gibt auf diese Weise in dieser Zone Wärme ab, wodurch das bereits vorerhitzte Material in dieser Zone aufgeschmolzen wird. Das verflüssigte Material fließt aus dem Aufnahmeraum für das Chargiergut kontinuierlich in das flüssige Schmelzbad des Ofenherdes, so daß hier die Betriebsbedingungen weitgehend konstant gehalten werden können. In der Zone des Fest-Flüssig-Übergangs finden darüber hinaus chemisch-metallurgische Umsetzungen, wie Schlackenbildung, Aufkohlung etc. statt, die durch gezielte Zufuhr von Sauerstoff, Kohle oder Zuschlägen begünstigt werden können. Es können somit nicht nur die thermischen Bedingungen im Ofenherd konstant gehalten und auf einen optimalen Arbeitspunkt eingestellt werden, sondern auch größere Schwankungen der Zusammensetzung der Schmelze verhindert, bzw. die Zusammensetzung der Schmelze gesteuert werden.

Die Erfindung wird durch Ausführungsbeispiele anhand von 4 Figuren näher erläutert. Es zeigen
- Fig. 1: in schematischer Darstellung einen senkrechten Schnitt durch einen Lichtbogenofen mit einem auf einer Seite des Ofengefäßes angeordneten Aufnahmeraum für Chargiergut,
- Fig. 2: eine Draufsicht, teilweise geschnitten, der Ausführungsform nach Fig. 1,
- Fig. 3 und 4: in den Fig. 1 und 2 entsprechenden Ansichten eine zweite Ausführungsform der Erfindung.

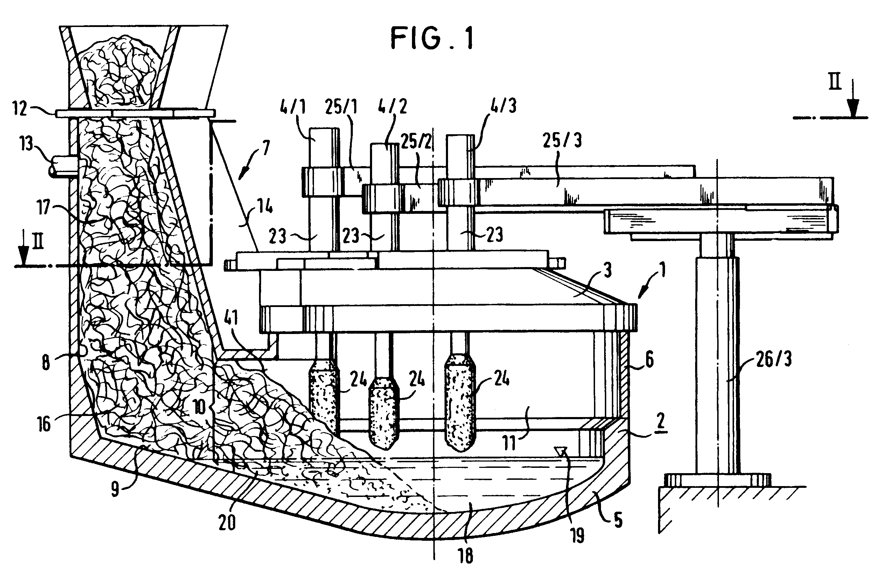

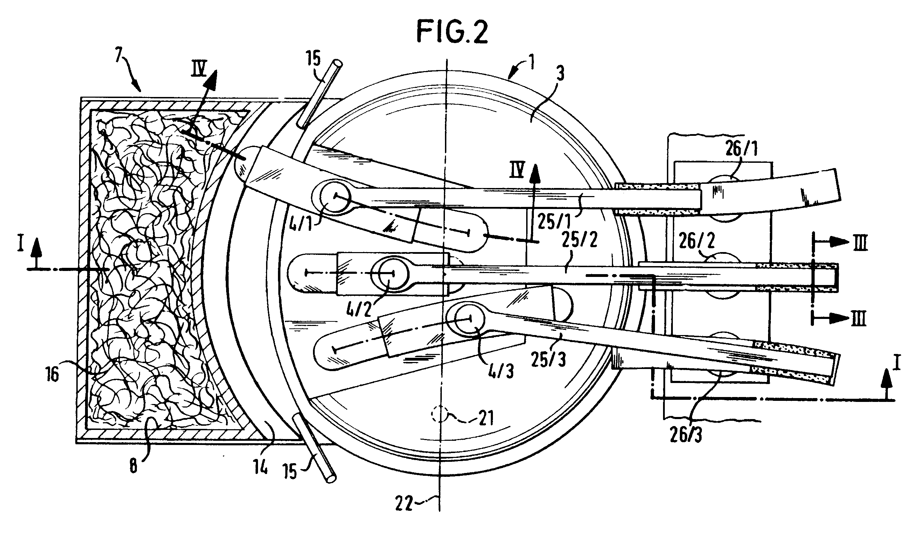

Das in den Fig. 1 und 2 in einem senkrechten Schnitt und in einer Draufsicht dargestellte Ofenaggregat enthält einen Lichtbogenofen 1 aus einem Ofengefäß 2 und einem abnehmbaren Deckel 3, durch den 3 Elektroden 4/1, 4/2 und 4/3 hindurchgeführt sind. Das Ofengefäß 2 ist durch einen Ofenherd 5 aus einer feuerfesten Ausmauerung und durch vorzugsweise flüssigkeitsgekühlte Wandelemente 6 gebildet. Auf einer Seite des Ofengefäßes, das im vorliegenden Fall, wie Fig. 2 zeigt, einen runden Querschnitt aufweist, ist ein schachtförmiger Chargiergutvorwärmer 7 mit einem Aufnahmeraum (Innenraum) 8 für Chargiergut angeordnet, der in einem an seinen Boden 9 angrenzenden Bereich durch eine Verbindungszone 10 mit dem Innenraum 11 des Ofengefäßes 2 verbunden ist. Der Chargiergutvorwärmer 7 weist in seinem oberen Bereich eine gasdichte Beschickungseinrichtung 12, z.B. einen Doppelglockenverschluß bekannter Bauart, sowie einen Gasauslaß 13 auf, an den eine nicht dargestellte Absaugvorrichtung angeschlossen ist.

Wie Fig. 2 zeigt, erstreckt sich der Chargiergutvorwärmer 7 etwa über ein Viertel des Umfangs des Ofengefäßes 2, wobei die dem Ofengefäß zugekehrte Schachtwand 14 des Chargiergutvorwärmers der Außenkontur des Ofengefäßes angepaßt ist. Aus Fig. 1 ist ersichtlich, daß sich der Querschnitt des Innenraums 8 des Chargiergutvorwärmers 7 nach unten erweitert. Hierdurch soll ein unbehindertes Absinken des Chargierguts im Chargiergutvorwärmer ermöglicht werden. In die Verbindungszone 10 münden Brenner 15, bzw. Düsen zum Einblasen von Gasen, wie Sauerstoff, oder von Feststoffen, wie Kohle oder Zuschlägen.

Das in den Chargiergutvorwärmer 7 chargierte Einsatzgut 16 kann aus Metallschrott, insbesondere Stahlschrott und anderen Eisenträgern, wie stückigem Roheisen, Eisenschwamm sowie Zuschlägen bestehen. Es bildet im Chargiergutvorwärmer 7 eine als Chargiergutsäule 17 bezeichnete gasdurchlässige Schüttsäule. Die im Lichtbogenofen 1 gebildete Metallschmelze (Sumpf) ist mit 18, der Schmelzspiegel mit 19 bezeichnet.

Der Boden 9 des Chargiergutvorwärmers 7, der vorzugsweise zum Ofenherd 5 hin abfallend ausgebildet ist, ist so tief angeordnet, daß sich über einen wesentlichen Teil des Einschmelzprozesses ein im Ofenherd gebildeter flüssiger Sumpf 18 in die unterste Zone 20 der Chargiergutsäule 17 erstreckt und hier einen unmittelbaren Stoff- und konduktiven Wärmeaustausch ermöglicht. Im Boden des Ofenherdes 5 ist ein exzentrischer Bodenabstich 21 vorgesehen, der in Fig. 2 gestrichelt dargestellt ist. Das Ofengefäß 2 ist im vorliegenden Fall kippbar ausgebildet. Die Kippebene, d.h. die Ebene, in der die Kippbewegung erfolgt, ist mit 22 bezeichnet. Der Chargiergutvorwärmer 7 ist in einer quer zur Kippebene des Ofengefäßes verlaufenden Richtung angeordnet.

Jede der Elektroden 4/1 bis 4/3 enthält einen flüssigkeitsgekühlten metallischen oberen Teil 23 und einen die Elektrodenspitze bildenden unteren Teil 24 aus verzehrbarem Material, wie Graphit, der am oberen Teil 23 lösbar befestigt ist. Jede Elektrode 4/1, 4/2 bzw. 4/3 ist mit ihrem oberen Teil 23 in einen Elektrodentragarm 25/1, 25/2 bzw. 25/3 eingespannt, der durch ein Elektrodenhubwerk 26/1, 26/2 bzw. 26/3 anhebbar und absenkbar ist. Die Elektrodenhubwerke 26/1 bis 26/3 sind auf der dem Aufnahmeraum für das Chargiergut, d.h. dem schachtförmigen Chargiergutvorwärmer 7 gegenüberliegenden Seite neben dem Ofengefäß 2 angeordnet.

Im folgenden wird der Einschmelzprozeß mit dem anhand der Fig. 1 und 2 beschriebenen Ofenaggregat erläutert.

Durch die Chargiervorrichtung 12 wird das feste stückige Einsatzgut 6 in den Aufnahmeraum 8 des Chargiergutvorwärmers 7 chargiert, bis sich eine ausreichende Säule 17 gebildet hat. Im Bereich der Verbindungszone 10 gelangt das feste Einsatzgut aufgrund des natürlichen Schüttwinkels 41 der Schüttung zum Teil bis in den Ofenherd.

Durch die Brenner 15 wird neben der Hitze durch die Lichtbogen der abgesenkten Elektroden zusätzlich Wärme eingebracht. Mit dem Aufschmelzprozeß sinkt das Einsatzgut 16 der Schüttsäule 17 nach unten, um in der untersten Zone aufgeschmolzen zu werden. Zur Begünstigung dieser Absinkbewegung ist der Querschnitt des Innenraums 8 des Chargiergutvorwärmers 7 nach unten erweitert. Der sich bildende flüssige Metallsumpf sammelt sich im Ofenherd und bewirkt durch die Badbewegung in der untersten Zone der Chargiergutsäule einen intensiven Stoff- und Wärmeaustausch. In dieser Zone können auch gewünschte metallurgische Umsetzungen stattfinden, die durch gezielte Zufuhr von Sauerstoff, Kohle oder Zuschlägen in dem durch die Brenner 15 angedeuteten Bereich oder durch dem Chargiergut beigemischte Zuschläge gesteuert werden.

Der Abstich erfolgt über die im Boden des Lichtbogenofens vorgesehene Abstichvorrichtung 21. Vorzugsweise wird hierbei ein Teil des Metallsumpfes im Ofengefäß für den nächsten Einschmelzprozeß züruckgehalten.

Während des Einschmelzprozesses brennen die Lichtbögen nur auf einem bereits vorhandenen flüssigen Sumpf benachbart zu dem noch festen Material, um gleichmäßige Betriebsbedingungen zu ermöglichen.

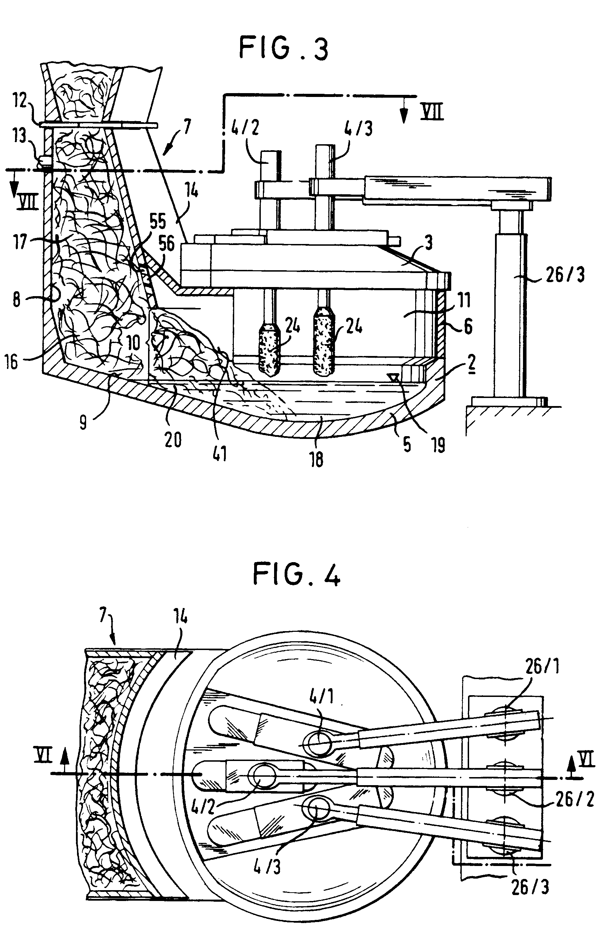

Bei der in den Fig. 3 und 4 dargestellten zweiten Ausführungsform ist, wie Fig. 3 zeigt, die Verbindungszone 10 vom Innenraum 11 des Ofengefäßes 2 zum Innenraum 8 des Chargiergutvorwärmers 7 schräg nach oben führend erweitert und in dem erweiterten Bereich eine mit Gasdurchtrittsöffnungen 55 versehene Trennwand 56 angeordnet. Hierdurch können über einen größeren Querschnitt der Chargiergutsäule 17 die heißen Ofengase in diese Säule eingeleitet werden.

Da bei den beschriebenen Ofenaggregaten die Elektroden nicht mehr durch Schrotteinstürze beim Einbrennen in eine Schrottcharge gefährdet sind, eignen sich in besonderer Weise sogenannte Dauerelektroden aus einem flüssigkeitsgekühlten metallischen oberen Teil und einem die Elektrodenspitze bildenden unteren Teil aus verzehrbarem Material, der am oberen Teil lösbar befestigt ist.

## Patentansprüche

1. Lichtbogenofen (1) zum Einschmelzen von eisenhaltigem Material, insbesondere von Stahlschrott, mit einem auf einer Seite des Ofengefäßes (2) vorgesehenen Aufnahmeraum (8) für Chargiergut, der mit dem Innenraum (11) des Ofengefäßes (2) verbunden ist und wenigstens teilweise im Strahlungsbereich des Lichtbogens wenigstens einer Lichtbogenelektrode (4/1, 4/2, 4/3) liegt, wobei als Aufnahmeraum (8) für das Chargiergut (16) der Innenraum eines auf einer Seite des Ofengefäßes (2) angeordneten, schachtförmigen Chargiergutvorwärmers (7) **mit sich nach unten erweiterndem Querschnitt** vorgesehen ist und der Innenraum in einem an seinen Boden (9) angrenzenden Bereich durch eine Verbindungszone (10) mit dem Innenraum (11) des Ofengefäßes (2) verbunden ist, durch die Chargiergut aus dem unteren Abschnitt einer im Chargiergutvorwärmer (7) vorhandenen Chargiergutsäule (17) dem Ofenherd (5) zuführbar ist und heiße Ofengase in den Chargiergutvorwärmer (7) einleitbar sind, ferner der Chargiergutvorwärmer (7) in seinem oberen Bereich eine **gasdichte** Beschickungseinrichtung (12) für das Chargiergut und einen Gasauslaß (13) mit einer Absaugvorrichtung für das im Wärmeaustausch mit dem Chargiergut abgekühlte Ofengas aufweist, **wobei** im Bereich der Verbindungszone (10) wenigstens ein Brenner (15) und/oder eine Düse angeordnet ist und der Boden (9) des Aufnahmeraums (8) für das Chargiergut so tief angeordnet ist, daß sich bei Bildung eines flüssigen Sumpfes (18) im Ofenherd dieser in den Aufnahmeraum erstreckt und in der untersten Zone der Chargiergutsäule (17) einen unmittelbaren Stoff- und konduktiven Wärmeaustauch ermöglicht.

2. Lichtbogenofen nach Anspruch 1, dadurch **gekennzeichnet,** daß der Boden (9) des Aufnahmeraums (8) für das Chargiergut zum Ofenherd (5) hin abfallend ausgebildet ist.

3. Lichtbogenofen nach Anspruch 1 oder 2, dadurch **gekennzeichnet,** daß die Verbindungszone (10) vom Innenraum (11) des Ofengefäßes (2) zum Innenraum (8) des Chargiergutvorwärmers (7) schräg nach oben führend erweitert ist und in dem erweiterten Bereich eine mit Gasdurchtrittsöffnungen versehene Trennwand zur Aufrechterhaltung einer Chargiergutsäule (17) angeordnet ist.

4. Lichtbogenofen nach einem der Ansprüche 1 bis 3, dadurch **gekennzeichnet,** daß er kippbar ausgebildet ist und der Chargiergutvorwärmer (7) in einer quer zur Kippebene (22) verlaufenden Richtung angeordnet ist.

5. Lichtbogenofen nach Anspruch 4, dadurch **gekennzeichnet,** daß im Boden des Ofenherdes (5) ein exzentrischer Bodenabstich (21) vorgesehen ist.

## Claims

1. An electric arc furnace (1) for smelting ferrous material, in particular steel scrap, having a space (8) for accommodating charging material, which is provided on one side of the furnace vessel (2) and which is connected to the interior (11) of the furnace vessel (2) and which is disposed at least partially in the area of radiation of the arc of at least one arc electride (4/1, 4/2, 4/3), wherein the interior of a shaft-like charging material preheater (7) which is disposed on one side of the furnce vessel (2) and which is of a cross-section that increases in a downward direction is provided as the space (8) for accommodating the charging material (16) and the interior is connected in a region adjoining its floor (9) with the interior (11) of the furnace vessel (2) through a connecting zone (10) through which charging material can be fed to the furnace hearth (5) from the lower section of a column (17) of charging material which is present in the charging material preheater (7) and hot furnace gases can be passed into the charging material preheater (7), and in addition the charging material preheater (7), in its upper region, has a gas-tight charging means (12) for the charging material and a gas outlet (13) with a suction removal means for the furnace gas which is cooled down in heat exchange relationship with the charging material, wherein at least one burner (15) and/or nozzle is disposed in the region of the connecting zone (10) and the floor (9) of the charging material accommodating space (8) is disposed at such a depth that, when a liquid sump pool (18) is formed in the furnace hearth, the liquid sump pool extends into the charging material accommodating space and permits direct material exchange and conductive heat exchange in the lowermost zone of the column (17) of charging material.

2. An electric arc furnace according to claim 1 characterised in that the floor (9) of the charging material accommodating space (8) has a fall towards the furnace hearth (5).

3. An electric arc furnace according to one of claims 1 to 2 characterised in that the connecting zone (10) is of an enlarging configuration inclinedly upwardly from the interior (11) of the furnace vessel (2) to the interior (8) of the charging material preheater (7) and disposed in the enlarged region is a partitioning wall which is provided with gas through-flow openings therein, for maintaining a column (17) of charging material.

4. An electric arc furnace according to one of claims 1 to 3 characterised in that it is tiltable and the charging material preheater (7) is arranged in a direction which extends transversely to the tilting plane (22).

5. An electric arc furnace according to claim 4 characterised in that an eccentric bottom tapping (21) is provided in the floor of the furnace hearth (5).

## Revendications

1. Four à arc (1) pour la fusion de matières ferreuses, notamment de riblons d'acier, comprenant une chambre de réception (8) du produit à charger prévue d'un côté de la carcasse du four (2) et communiquant avec l'intérieur (11) de la carcasse du four (2), et au moins une électrode d'arc électrique (4/1, 4/2, 4/3) se trouvant au moins partiellement dans la région de rayonnement de l'arc électrique, l'intérieur d'un dispositif de préchauffage (7) du produit à charger, en forme de puits, de section transversale s'évasant vers le bas, et disposé d'un côté de la carcasse du four (2), étant prévu comme chambre de réception (8) du produit à charger (16), et une partie adjacente au fond (9) de l'intérieur du dispositif de préchauffage (7) communiquant, par une zone de liaison (10), avec l'intérieur (11) de la carcasse du four (2), zone de communication par laquelle le produit à charger peut être amené de la partie inférieure d'une colonne (17) de produit à charger présente dans le dispositif de préchauffage (7) du produit à charger, à la sole du four (5) et des gaz chauds du four peuvent être envoyés dans le dispositif de préchauffage (7) du produit à charger, le dispositif de préchauffage (7) du produit à charger comportant, en outre, dans sa partie supérieure un dispositif de chargement (12) étanche aux gaz pour le produit à charger et une sortie pour les gaz (13) munie d'un dispositif d'aspiration pour le gaz du four refroidi par échange de chaleur avec le produit à charger, dans lequel, dans la région de la zone de communication (10), est disposé au moins un brûleur (15) et/ou une buse, et en ce que le fond (9) de la chambre de réception (8) du produit à charger est si bas que, lorsqu'il se forme une mare (18) liquide dans la sole du four, cette mare s'étend dans la chambre de réception et permet, dans la zone la plus basse de la colonne (17) de produit à charger, un transfert de matière et un échange de chaleur par conduction qui sont directs.

2. Four à arc suivant la revendication 1, caractérisé en ce que le fond (9) de la chambre de réception (8) du produit à charger est en pente descendante vers la sole du four (5).

3. Four à arc suivant l'une des revendications 1 à 2, caractérisé en ce que la zone de communication (10) s'évase en étant inclinée vers le haut de l'intérieur (11) de la carcasse du four (2) vers l'intérieur (8) du dispositif de préchauffage (7) du produit à charger, et dans la partie évasée est montée une cloison qui est munie d'orifices de passage du gaz et qui est destinée à maintenir une colonne (17) de produit à charger.

4. Four à arc suivant l'une des revendications 1 à 3, caractérisé en ce qu'il est constitué de manière basculante, et le dispositif de préchauffage (7) du produit à charger est disposé dans une direction s'étendant transversalement au plan de basculement (22).

5. Four à arc suivant la revendication 4, caractérisé en ce que dans le fond de la sole du four (5) est prévu un trou de coulée de fond (21) excentré.
